# EUROPÄISCHE PATENTANMELDUNG

(11) **EP 1 348 908 A2**
(43) Veröffentlichungstag der Anmeldung: **01.10.2003**
(21) Anmeldenummer: 03100212.4
(22) Anmeldetag: 03.02.2003
(51) Int. Cl.: F23M 13/00, F23R 3/00, F23N 5/16, F23N 5/24

(54) **Verfahren und Vorrichtung zur Kontrolle von thermoakustischen Instabilitäten bzw. Schwingungen in einem Verbrennungssystem**

(30) Priorität: 27.03.2002 DE 10213682
(71) Anmelder: ALSTOM (Switzerland) Ltd, 5401 Baden (CH)
(72) Erfinder: Gutmark, Ephraim, Cincinnati, OH 45236 (US); Paschereit, Christian Oliver, 5400, Baden (CH)

(57) **Zusammenfassung**

Bei einem Verfahren zur Kontrolle von thermoakustischen Instabilitäten bzw. Schwingungen in einem Verbrennungssystem (15) werden mit den thermoakustischen Instabilitäten verknüpfte Druckschwingungen und/oder Wärmefreisetzungsschwingungen im Verbrennungssystem (15) gemessen, das resultierende Messsignal gefiltert, zeitlich verzögert und verstärkt, und nach Massgabe des gefilterten, verzögerten und verstärkten Messsignals der Brennstoffstrom zum oder die Verbrennungsluft für das Verbrennungssystem (15) moduliert.

Bei einem solchen Verfahren wird der Einsatz kostengünstigerer Modulationseinrichtungen dadurch erreicht, dass die Modulation bei einer Subharmonischen einer dominanten Instabilitätsfrequenz im Verbrennungssystem (15) erfolgt.

## Beschreibung

### TECHNISCHES GEBIET

Die vorliegende Erfindung bezieht sich auf das Gebiet der Technik von Verbrennungssystemen, insbesondere für Gasturbinen. Sie betrifft ein Verfahren zur Kontrolle von thermoakustischen Instabilitäten bzw. Schwingungen in einem Verbrennungssystem gemäss dem Oberbegriff des Anspruchs 1, sowie eine Vorrichtung zur Durchführung des Verfahrens.

### STAND DER TECHNIK

Moderne Hochleistungsverbrennungssysteme für Gasturbinen benötigen einen Betrieb mit hohem Wirkungsgrad, der frei von thermoakustischen Schwingungen ist, mit nahezu keinen Emissionen verbunden ist, und eine niedrige Ausblasgrenze im Magerbetrieb aufweist. Insbesondere thermoakustische Schwingungen können sich auf den ordnungsgemässen Betrieb von Gasturbinenanlagen nachteilig auswirken. Es sind daher bereits in der Vergangenheit aktive Kontrollmechanismen eingesetzt worden, um thermoakustische Instabilitäten, die aus einer Kopplung zwischen Wärmefreisetzung und akustischen Moden im Verbrennungssystem herrühren, zu unterdrücken. Diese Kontrollmechanismen haben generell die Verbrennungsluft gepulst oder die Brennstoffeinspritzung moduliert und dabei eine Phasenverschiebung relativ zu den Druck- oder Wärmefreisetzungsoszillationen herbeigeführt, derart, dass der Druckanstieg und die Wärmefreisetzung voneinander entkoppelt werden.

Insbesondere sind aktive Kontrollsysteme mit offenen und geschlossenen Regelschleifen eingesetzt worden, um die thermoakustischen Druckoszillationen zu unterdrücken und die unerwünschten Emissionen von Schadstoffen während der Vormischverbrennung zu reduzieren. Dabei wurden Mikrophone oder Detektoren für die OH-Emission verwendet, um den Verbrennungsprozess zu überwachen und die notwendigen Eingangssignale für das Kontrollsystem zu liefern.

So ist in der EP-A1-0 918 152 ein Verfahren und eine Vorrichtung zur Kontrolle thermoakustischer Schwingungen in einem Verbrennungssystem vorgeschlagen worden, bei dem in dem Verbrennungssystem ein mit den thermoakustischen Fluktuationen korreliertes Signal gemessen und anschliessend gefiltert und in der Phase gedreht wird, und schliesslich zum Treiben einer akustischen Quelle eingesetzt wird, mittels derer die Scherschichten im Verbrennungssystem akustisch angeregt werden.

Aus der E-A1-1 050 713 ist ein Verfahren zur Unterdrückung bzw. Kontrolle von thermoakustischen Schwingungen in einem Verbrennungssystem bekannt, bei welchem in einer geschlossenen Regelschleife die thermoakustischen Schwingungen detektiert, und in Abhängigkeit von den detektierten Schwingungen mittels Lautsprechern akustische Schwingungen einer bestimmten Amplitude und Phase erzeugt und in das Verbrennungssystem eingekoppelt werden, wobei innerhalb der Regelschleife die Amplitude der erzeugten akustischen Schwingungen proportional zur Amplitude der detektierten Schwingungen gewählt wird.

In der US-A1-20010027638 schliesslich werden ein Verfahren und eine Vorrichtung zur Minimierung von thermoakustischen Schwingungen in der Brennkammer einer Gasturbine beschrieben, bei dem anstelle der Einkopplung von akustischen Schwingungen das Einsprühen des Vormisch-Brennstoffes in den Vormischbrenner zur schwingungsunterdrückenden Beeinflussung des Verbrennungsprozesses eingesetzt wird.

Die bekannten Kontrollsysteme zur Unterdrückung der thermoakustischen Schwingungen benötigen alle Aktuatoren mit höherer Arbeitsfrequenz, um den Brennstoffstrom oder die Verbrennungsluft zu modulieren. Die Modulationen müssen in Echtzeit relativ zum Verbrennungsdruck oder zur Wärmefreisetzung erfolgen, die Ausgangspunkt der Druck- oder Wärmefreisetzungsschwankungssignale sind. Wenn die instabilen Moden bei hohen Frequenzen liegen, stellen die Erhältlichkeit und Bezahlbarkeit von entsprechenden Aktuatoren wegen der Seltenheit solcher Bauelemente ein praktisches Problem dar. Niederfrequente Aktuatoren oder Ventile sind dagegen sehr viel einfacher zu bekommen.

### DARSTELLUNG DER ERFINDUNG

Es ist daher Aufgabe der Erfindung, ein Verfahren zur Kontrolle (Schwächung bzw. Unterdrückung) von thermoakustischen Schwingungen in Verbrennungssystemen anzugeben, welches die Nachteile bekannter Verfahren vermeidet und sich insbesondere für den Einsatz von Aktuatoren und/oder Ventilen mit niedriger Arbeitsfrequenz eignet, sowie eine Vorrichtung zur Durchführung des Verfahrens anzugeben.

Die Aufgabe wird durch die Gesamtheit der Merkmale der Ansprüche 1 und 4 gelöst. Der Kern der Erfindung besteht darin, anstelle der dominanten Instabilitätsmoden selbst deren Subharmonische für die Kontrollvorrichtung und Modulation einzusetzen. Hierdurch können die dominanten Instabilitätsmoden geschwächt bzw. unterdrückte werden, ohne dass entsprechend hochfrequente Aktuatoren für die Modulation eingesetzt werden müssen.

Die Filterung des Messsignals erfolgt dabei vorzugsweise in einem Bandpassfilter.

Bewährt hat es sich, dass die Modulation bei der 2. Subharmonischen einer dominanten Instabilitätsfrequenz erfolgt.

Eine bevorzugte Ausgestaltung der Vorrichtung nach der Erfindung ist dadurch gekennzeichnet, dass das Bandpassfilter auf die 2. Subharmonische einer dominanten Instabilitätsfrequenz im Verbrennungssystem abgestimmt ist.

Die Modulationseinrichtung umfasst dabei entweder ein schnelles Ventil und der Modulationskanal ist die Brennstoffzufuhr zum Verbrennungssystem, oder die Modulationseinrichtung umfasst einen akustischen Treiber und der Modulationskanal ist die Verbrennungsluftzufuhr zum Verbrennungssystem.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Blockschema einer Kontrollvorrichtung, wie sie zur Durchführung des erfindungsgemässen Verfahrens geeignet ist;
- Fig. 2: Messergebnisse für die Druckschwankungen bei Anwendung des erfindungsgemässen Verfahrens bei verschiedenen Instabilitätsfrequenzen (dominant und subharmonisch) in Abhängigkeit von der in der Kontrollvorrichtung nach Fig. 1 eingestellten Phase; und
- Fig. 3: Messergebnisse für die Druckschwankungen bei Anwendung des erfindungsgemässen Verfahrens bei verschiedenen Instabilitätsfrequenzen (dominant und subharmonisch) in Abhängigkeit von der in der Kontrollvorrichtung nach Fig. 1 eingestellten Verstärkung (Amplitude).

### WEGE ZUR AUSFÜHRUNG DER ERFINDUNG

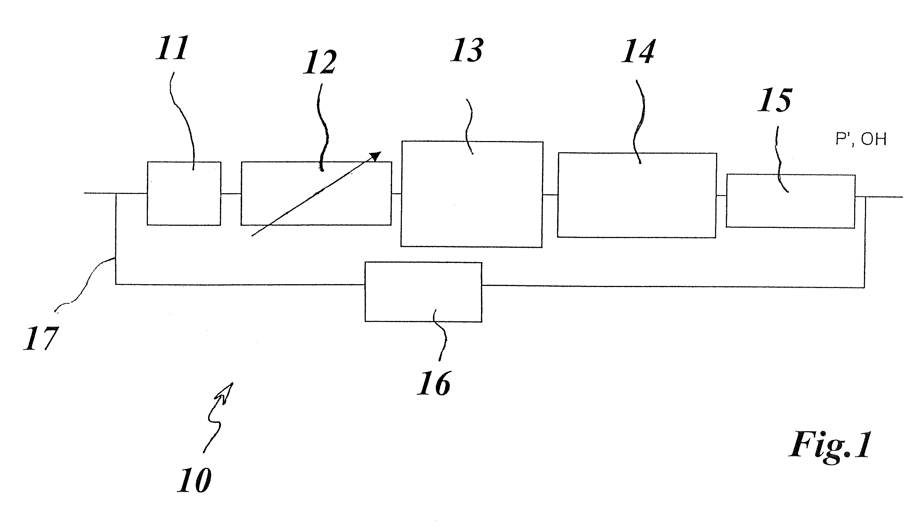

Ein Blockdiagramm einer bei der Erfindung eingesetzten Kontrollvorrichtung ist in Fig. 1 dargestellt. Die Kontrollvorrichtung 10 umfasst eine Regelschleife 17, in der ein Bandpassfilter 11, eine Verzögerungs- und Verstärkungseinheit 12, eine Modulationseinrichtung 13, ein Modulationskanal 14, das zu beeinflussende Verbrennungssystem 15 (Brenner und Brennkammer), sowie eine Steuereinheit 16 angeordnet sind. Die Druckschwingungen (P' in Fig. 1) oder die Wärmefreisetzungsschwingungen (OH in Fig. 1) im Verbrennungssystem 15 werden mit aus dem zitierten Stand der Technik bekannten Methoden gemessen und das resultierende Messsignal wird über die Steuereinheit 16 und das Bandpassfilter 11 zurückgekoppelt. Das gefilterte Signal wird in der Verzögerungs- und Verstärkungseinheit 12 verstärkt und zeitlich verzögert, um die gewünschte Änderung in der Phase zu erhalten. Die Verzögerungseinheit innerhalb der Verzögerungs- und Verstärkungseinheit 12 wird durch die Steuereinheit 16 auf einen optimierten Verzögerungswert eingestellt und liefert dann das verstärkte und phasenverschobene Signal an die Modulationseinrichtung 13, die über einen Modulationskanal 14 auf das Verbrennungssystem 15 einwirkt.

Wenn der Modulationskanal 14 die Brennstoffzufuhr zum Verbrennungssystem 15 ist, wird als Modulationseinrichtung 13 ein schnelles Ventil eingesetzt welches den Brennstoffstrom moduliert. Wenn der Modulationskanal 14 die Verbrennungsluftzufuhr zum Verbrennungssystem 15 ist, wird als Modulationseinrichtung 13 ein akustischer Treiber eingesetzt, der in der Verbrennungsluft akustische Schwingungen anregt. Das Bandpassfilter 11 ist nun erfindungsgemäss auf eine Subharmonische einer dominanten Instabilitätsfrequenz im Verbrennungssystem 15 eingestellt. Über ihre Subharmonische wird dann die zugehörige Instabilitätsfrequenz selbst beeinflusst.

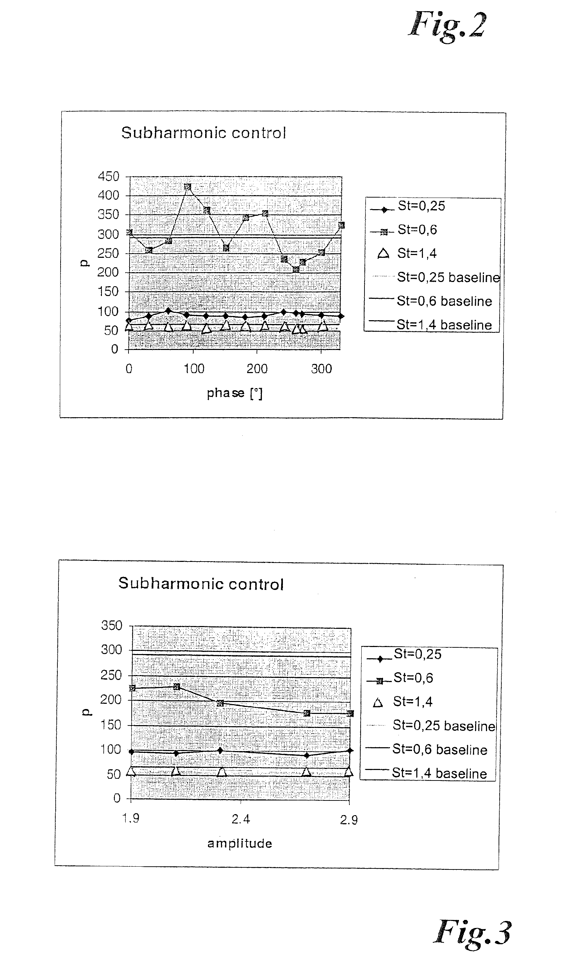

Testmessungen wurden unter Standardbedingungen bei 560 kW Leistung und einem Lambda-Wert von 2,1 durchgeführt, wobei die 2. Subharmonische Frequenz zur Modulation benutzt wurde. Es wurden normierte Frequenzen (Strouhal-Zahl St) verwendet. Die Strouhal-Zahl ist bekanntermassen das Produkt aus Frequenz und Durchmesser, geteilt durch die Geschwindigkeit. Die Ergebnisse der Testmessungen sind in Fig. 2 dargestellt, wo Druckschwankungen (p) im Verbrennungssystem für zwei normierte Instabilitätsfrequenzen (St= 0,6 und St=1,4) und für das subharmonische Anregungssignal (St=0,25) als Funktion der Zeitverzögerung, ausgedrückt durch die Phasenverschiebung (Phase in °), gezeigt sind. Die subharmonische Kontrolle führt zu einer Unterdrückung der normierten dominanten Instabilitätsfrequenz (St=0,6) um bis zu 31% relativ zum Grundniveau (baseline). Die zweite höhere Frequenz (St=1,4) und die aufgeprägte Frequenz (St=0,25) liegen auf einem viel tieferen Niveau.

Gemäss Fig. 3 führt eine Änderung der Verstärkung (amplitude) zu einer Unterdrückung der dominanten normierten Frequenz (St=0,6) von bis zu 40%, ohne die zweite instabile Mode oder das eingeprägte Signal wesentlich zu verändern.

### BEZUGSZEICHENLISTE

- 10: Kontrollvorrichtung
- 11: Bandpassfilter
- 12: Verzögerungs- und Verstärkungseinheit
- 13: Modulationseinrichtung
- 14: Modulationskanal
- 15: Verbrennungssystem
- 16: Steuereinheit
- 17: Regelschleife

## Patentansprüche

1. Verfahren zur Kontrolle von thermoakustischen Instabilitäten bzw. Schwingungen in einem Verbrennungssystem (15), bei welchem mit den thermoakustischen Instabilitäten verknüpfte Druckschwingungen und/oder Wärmefreisetzungsschwingungen im Verbrennungssystem (15) gemessen werden, das resultierende Messsignal gefiltert, zeitlich verzögert und verstärkt wird, und nach Massgabe des gefilterten, verzögerten und verstärkten Messsignals der Brennstoffstrom zum oder die Verbrennungsluft für das Verbrennungssystem (15) moduliert wird, **dadurch gekennzeichnet, dass** die Modulation bei einer Subharmonischen einer dominanten Instabilitätsfrequenz im Verbrennungssystem (15) erfolgt.

2. Verfahren nach Anspruch 1, **dadurch gekennzeichnet, dass** die Filterung des Messsignals in einem Bandpassfilter (11) erfolgt.

3. Verfahren nach einem der Ansprüche 1 oder 2, **dadurch gekennzeichnet, dass** die Modulation bei der 2. Subharmonischen einer dominanten Instabilitätsfrequenz erfolgt.

4. Vorrichtung zur Durchführung des Verfahrens nach Anspruch 1, umfassend Mittel zur Messung der mit den thermoakustischen Instabilitäten verknüpfte Druckschwingungen und/oder Wärmefreisetzungsschwingungen im Verbrennungssystem, ein Bandpassfilter (11), eine Verzögerungs- und Verstärkungseinheit (12), eine Modulationseinrichtung (13) sowie einen zum Verbrennungssystem (15) führenden Modulationskanal (14), welche in einer geschlossenen Regelschleife (17) angeordnet sind, **dadurch gekennzeichnet, dass** das Bandpassfilter (11) auf eine Subharmonische einer dominanten Instabilitätsfrequenz im Verbrennungssystem (15) abgestimmt ist.

5. Vorrichtung nach Anspruch 4, **dadurch gekennzeichnet, dass** das Bandpassfilter (11) auf die 2. Subharmonische einer dominanten Instabilitätsfrequenz im Verbrennungssystem (15) abgestimmt ist.

6. Vorrichtung nach einem der Ansprüche 4 oder 5, **dadurch gekennzeichnet, dass** die Modulationseinrichtung (13) ein schnelles Ventil umfasst und der Modulationskanal (14) die Brennstoffzufuhr zum Verbrennungssystem (15) ist.

7. Vorrichtung nach einem der Ansprüche 4 oder 5, **dadurch gekennzeichnet, dass** die Modulationseinrichtung (13) einen akustischen Treiber umfasst und der Modulationskanal (14) die Verbrennungsluftzufuhr zum Verbrennungssystem (15) ist.
